Europäisches Patentamt

**European Patent Office**

**Office européen des brevets**

(11) Publication number: **0 233 657**
**B1**

(12) **EUROPEAN PATENT SPECIFICATION**

(45) Date of publication of patent specification: **04.04.90**

(51) Int. Cl.⁵: **B 65 G 47/24, B 65 G 1/00**

(21) Application number: **87200028.6**

(22) Date of filing: **12.01.87**

(54) **Inverter for packaging lines of palletizable materials.**

(30) Priority: **24.01.86 IT 1917186**

(43) Date of publication of application:
**26.08.87 Bulletin 87/35**

(45) Publication of the grant of the patent:
**04.04.90 Bulletin 90/14**

(84) Designated Contracting States:
**DE ES FR GB IT**

(56) References cited:
**CH-A- 535 702**
**DE-A-2 320 331**
**US-A-3 071 257**

(73) Proprietor: **CAR-VENTOMATIC S.p.A.**
**Via G.Marconi, 20**
**I-24030 Valbrembo (BG) (IT)**

(72) Inventor: **Moltrasio, Mario**
**Corso Vittorio Emanuele, 34**
**I-24100 Bergamo (IT)**

(74) Representative: **de Pasquale, Carlo**
**Via Carlo Ravizza 53**
**I-20149 Milano (IT)**

Courier Press, Leamington Spa, England.

EP 0 233 657 B1

## Description

Use of pallets to move easily materials contained in stacked bags, boxes, blocks, and the like is widely known and spread.

High cost of said pallets is limiting their use to the cases in which empty pallets can be easily recycled.

In order to extend as much as possible the use of stacked materials for shipment overseas and in other cases where it is not economically possible to recover the pallets, two systems were used up to now: use of disposable pallets of light and rough structure; and packaging of the stacked products in a plastic envelope, leaving two empty spaces at the sides of the last layer of said products, where forks of lift trucks or cranes may be inserted, so as to obtain a system giving the same possibilities of moving products stacked on pallets, but more economical, in addition to obtaining a good weather protection.

In order to obtain these packagings of stacked products in plastic envelopes, packaging lines are already known, comprising a first enveloping machine, a first shrinkage oven, an edge forming device, an inverter, a second enveloping machine and a second shrinkage oven. The stacked block to be processed is formed and moved from one machine to the other, on rubber conveyor belts or chain conveyors.

When powdered or granular materials are processed, the package is a bag, namely a non rigid packaging element, with the consequence that the bags are placed on rubber belts supported by idler rollers and therefore are deformed and are causing traction/bending stresses on the conveyor belts by a phenomenon of pulsating traction, so that the lifetime of the belt is strongly affected. Moreover, it is difficult to avoid belt skid because of its irregular stretch and slow velocity.

Some manufacturers then resorted to chain conveyors, which have a longer lifetime but require a higher investment and moreover, when it is not possible to use roller chains, like in the case of cement bags or brick blocks so as to be compelled to use drag chains, their wear is very high, more particularly when they are installed in dusty environments like cement factories.

US—A—3 071 275 discloses an inverter for palletizable materials arranged on a pallet formed by discs provided with upper and lower conveyor rollers, which by a rotation of 180 degrees causes the material placed on said pallet to be transferred on a second pallet subsequently placed on said material.

CH—A—535 702 discloses a fork with a plurality of arms, adapted to be inserted between the floor ribs of a railway freight car so as to load materials without pallets.

Starting from an inverter as disclosed in US—A—3 071 275, the above mentioned problems are solved by an inverter with the features recited in the characterizing part of Claim 1.

The present invention relates to this kind of packaging lines and provides for a special inverter adapted to pick up the pile outcoming from the first set of packaging machines from a specially designed pallet, and to lay it upturned by 180 degrees on the same pallet which in the meantime passed under the inverter during said inversion operation and is now stopped at the point where the inverter lays down the upturned pile.

With such a system the pile of stacked products is moved from one set of packaging machines to the other set of the line, yet laying on pallets, so that it is possible to use for said movement a driven roller conveyor, which is far less expensive and subject to wear, instead of the belt or chain conveyor with the relevant known drawbacks.

The invention will be better understood with the detailed description of the embodiment given as a non limiting example only, where the term "bags" will be used as a container for the stacked products, it being however understood that such containers may be also boxes, blocks and the like, and to be taken with reference to the accompanying sheets of drawings in which:

Figure 1 is a view of a pallet to be used according to the invention, seen on the axis of movement on the packaging line;

Figure 2 is a similar view of the pallet of Figure 1, but taken at 90 degrees to the view of Figure 1;

Figure 3 is a schematic view of a packaging line for plastic envelopes of containers stacked according to the invention; and

Figure 4 is an enlarged view of the inverter in its several operative positions.

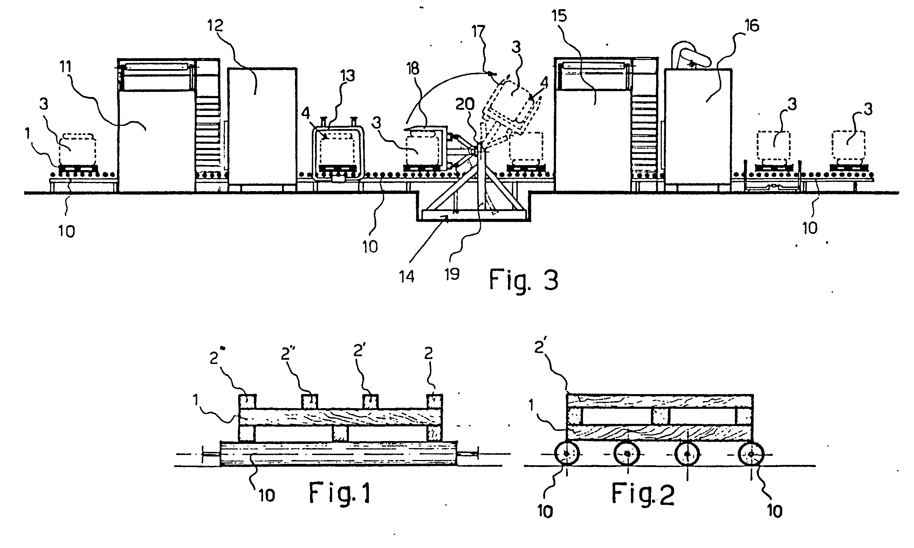

With reference to Figures 1 and 2, the pallet 1 to be used according to the invention has a structure which is quite similar to the conventional pallets, but at its upper surface instead of being flat, it has a set of beams 2, 2', 2'' parallel to one another and having a height which is slightly greater than the thickness of the multiple inverting forks.

Referring now to Figure 3, the packaging line comprises a set of driven roller conveyors 10, astride which a series of known machines are arranged, namely a first enveloping machine 11, a first shrinkage oven 12, an edge forming machine 13, an inverter 14 according to the invention, a second enveloping machine 15 and a second shrinkage oven 16.

The bags 3 to be packaged are laid by the conventional palletizing machine on the beams 2, 2', 2'' of these pallets which are moved along the packaging line with said beams 2, 2', 2'' parallel to the direction of movement, sliding on the conveyor rollers 10.

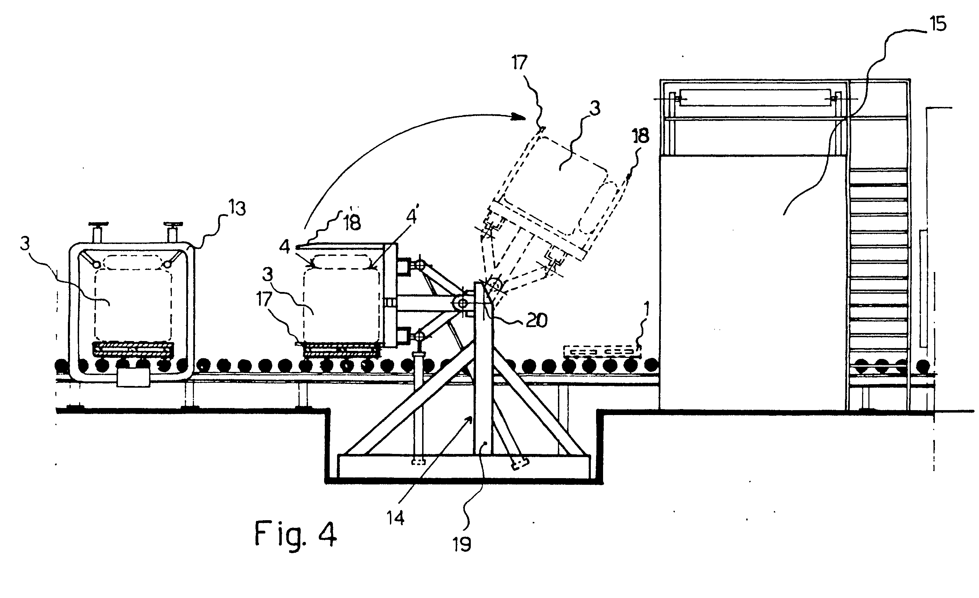

Then the pallet 1 complete with the bags 3 laid on it in alternate crossing piles and with the last layer having two end free spaces 4 and 4' to insert, once packaged, the forks of the loading devices, is sent to the first enveloping machine 11 and then enters the first oven 12, passes to the edge former 13, thus reaching the inverter 14 according to the present invention. The inverter 14 of the invention, to be seen also in Figure 4, comprises a support frame 19 having such a structure as to allow the roller conveyor 10 to pass under the inversion axis of the inverter, an inverting device adapted to swing, through known pneumatic, hydraulic and like systems, around an axis 20 parallel to the axis of the conveyor rollers, and provided with a set of lower forks 17 and upper forks 18, both having so many arms as the spaces between the beams 2, 2', 2'' of the pallet 1, said arms having such a size as to be able to be inserted in said spaces between said beams 2, 2', 2'' of the pallet 1.

The operation of the device is the following: The pallet 1 with the bag pile coming from the edge former 13, thus already provided with the first envelope, reaches the inverter 14 according to the present invention so that the multiple lower forks 17 can be easily inserted in the free spaces between the beams 2, 2', 2'' of the pallet 1.

At this point a command, known per se, is given to the roller actuators and the pallet advancement is stopped. Then the lower forks 17 are raised against the base of the materials laid on the pallet 1 and at the same time the upper forks 18 are lowered and contact the upper pile side so that the pile is firmly clamped between said multiple forks 17 and 18.

Now begins rotation of the inverter 14 and the contemporaneous movement of the now empty pallet 1 which goers on up to a stop position at the opposite side of the inverter, exactly under the position of the upturned pile, so that the arms of the forks 18 now in the lower position, enter the spaces between beams 2, 2', 2'' of the pallet and the bag pile therefore is again laid on the pallet, yet in an inverted position.

The pallet may now resume its movement to the second enveloping machine 15 and the second oven 16, until the pile now completely packaged is removed from the packaging line and the pallet 1 is brought back to the stacking machine.

As already mentioned, with this system it is possible to remove all drawbacks underwent by the known machines stacking the materials directly on the conveyors of the packaging line and to adopt for moving the materials to and between the several stations of the packaging line, driven roller conveyors having a lower cost and a longer lifetime in comparison with the belt and chain conveyors hitherto used.

It is to be understood that the foregoing embodiment was described as a non limiting example only and there might be many practical embodiments of the inventive principle consisting of an inverter adapted to pick up from and lay again on a pallet a pile of materials, and the use of a specially designed pallet on which it is possible to move the piles of materials from one machine to the other of a packaging line for shrinkable bags.

Just as an example, instead of moving both sets of forks 17 and 18 of the inverter, the fork 17 could be fixed and the roller plane on which the pallet is laid could be lowered. It is also a measure easily conceivable by a man skilled in the art, to apply at the points where the inverter is operating, means to place the pallet flush with the axis of the forks of said inverter, both before and after the inversion operation.

## Claims

1. Inverter (14) for packaging lines for palletizable materials, adapted to receive a pile (3) of stacked materials on a pallet (1) and to upturn said pile by 180 degrees, characterized by the fact of being adapted to pick up the pile (3) of stacked materials outcoming from a first set of packaging machines (11, 12, 13) clamping the pile between multiple forks (17, 18), said pile being formed and placed on the pallet (1) moving the pile from one machine of the packaging line to the other, and to lay said pile upturned by 180 degrees on the same pallet which in the meantime passed under the inverter (14) during the inversion operation and was stopped at the point where the inverter is laying the upturned pile.

2. Inverter according to Claim 1, characterized by the fact that the devices moving the pile (3) on the pallet (1) from one machine of the packaging line to the other, are arranged also under the inverter (14).

3. Inverter according to Claims 1 or 2, characterized by the fact that as devices moving the pile from one machine of the packaging line to the other, driven rollers (10) are used, having a far lower cost and wear in comparison with the belt or chain conveyors now used.

4. Inverter according to Claim 1, characterized in that the pallet (1) has a set of beams (2, 2', 2'') parallel to one another at their upper part, instead of being flat like the conventional pallets.

5. Inverter according to Claim 1, characterized by the fact that the arms of the forks (17, 18) of the inverter are arranged so as to have distances and thicknesses between each other which are compatible with the distance and height of the beams (2, 2', 2'') of the pallet (1) so as to be inserted easily in the spaces between said beams, or vice versa the beams (2, 2', 2'') of the pallets (1) have a distance and thickness compatible with the distance and height of the arms of the forks (17, 18) of the inverter (14).

## Patentansprüche

1. Kippmaschine (14) für Verpackungsanlagen von palettierbarem Gut, fähig, einen Stapel (3), auf einer Ladepritsche (1) geschichteten Gutes aufzunehmen und diesen Stapel um 180° zu kippen, ist dadurch gekennzeichnet, in der Lage zu sein, den, von einer ersten Reihe von Verpackungsmaschinen (11—12—13) herkommenden Stapel aufgeschichteten Gutes (3)—dieser Stapel, abgesetzt und geformt auf der Ladepritsche, die ihn von einer Maschine zur anderen der Verpackungsanlage weiterträgt—aufzunehmen, indem der Stapel zwischen Mehrfachgabeln geklemmt wird und diesen um 180° gekippt auf der gleichen Ladepritsche wieder abzustellen, die während des Kippvorgangs unter der Kippmaschine hindurchgelaufen ist und in der entsprechenden Zone angehalten hat, in der die Kippmaschine den gekippten Stapel ablädt.

2. Kippmaschine gemäs Patentanspruch 1 und dadurch gekennzeichnet ist, dass die Transportmittel des Stapels (3) auf der Palette (1) von einer Maschine zur anderen der Verpackungsanlage auch unter der Kippmaschine hindurchlaufen.

3. Kippmaschine gemäss den Patentansprüchen 1 oder 2 und die dadurch gekennzeichnet ist, dass als Transportmittel des Stapels von einer Maschine zur anderen der Verpackungsanlage gesteuerte Rollenförderer (10) eingesetzt werden, die bedeutend niedrigere Kosten und geringere Abnutzung aufweisen, als die heute in der Anwendung befindlichen Förderbänder oder Förderketten.

4. Kippmaschine gemäss Patentanspruch 1 und die dadurch gekennzeichnet ist, dass die Ladepritsche (1) eine Reihe von parallel zueinander stehenden Polsterhölzern (2—2'—2'') auf ihrer Oberseite, anstatt eine ebene Oberfläche wie die herkömmlichen Paletten aufweist.

5. Kippmaschine gemäss Patentanspruch 1 und die dadurch gekennzeichnet ist, dass die Gabelzinken (17—18) zur Kipping so angebracht sind, dass zwischen ihnen, mit dem Stand und der Höhe der Polsterhölzer (2—2'—2'') der Palette (1) vereinbare Abstände und Dicken bestehen, um sie so leicht in die leer gelassenen Räume zwischen o.g. Polsterhölzern einführen zu können, oder umgekehrt, dass die Polsterhölzer (2—2'—2'') der Paletten (1) einen Abstand und eine Dicke aufweisen, die vereinbar sind mit dem Stand und den Dicken der Gabelzinken (17—18) der Kippmaschine (14).

**Revendications**

1. Culbuteur (14) pour installations d'emballage de matériaux pouvant être mis sur pallets, apte à recevoir une pile (3) de matériau empilé sur un pallet (1) et à culbuter cette pile à 180°, caractérisé par le fait d'être à même de prélever la pile (3) de matériau empilé à la sortie à partir d'une première série de machines à emballer (11—12—13) en serrant la pile entre des fourches multiples (17—18), une fois formée et déposée cette pile sur le pallet (1) qui portera la pile d'une machine à l'autre de l'installation d'emballage et de déposer cette pile culbutée à 180° sur ce même pallet qui entre temps est passé en-dessous du culbuteur (14) pendant l'opération de basculage et qui s'est arrêté en correspondence de la zone où le culbuteur dépose la pile culbutée.

2. Culbuteur selon la revendication 1, caractérisé par le fait que les moyens de transport de la pile (3) sur le pallet (1) d'une machine à l'autre de l'installation d'emballage, se déplacent également en-dessous du culbuteur (14).

3. Culbuteur selon les revendications 1 ou 2, caractérisé par le fait que, comme moyen de transport de la pile d'une machine à l'autre de l'installation d'emballage, on utilise des rouleaux commandés (10) ayant un coût et une usure nettement inférieures à ceux d'un ruban ou d'une chaîne actuellement utilisés.

4. Culbuteur selon la revendication 1, caractérisé par le fait que le pallet (1) a une série de poutrelles (2—2'—2'') parallèles entre elles dans leur partie supérieure au lieu d'une surface plate comme celle du pallet habituel.

5. Culbuteur selon la revendication 1, caractérisé par le fait que les dents de fourches (17—18) de culbutage sont placées de façon à avoir entre elles des distances et des épaisseurs compatibles avec le pas et la hauteur des poutrelles (2, 2', 2'') du pallet (1) pour permettre aisément de s'introduire entre les espaces laissés par ces poutrelles, ou viceversa que les poutrelles (2, 2', 2'') du pallet (1) aient une distance et une épaisseur compatibles avec le pas et l'épaisseur des dents des fourches (17—18) du culbuteur (14).

Fig. 1

Fig.2

Fig. 3

Fig. 4